# EUROPÄISCHE PATENTSCHRIFT

(11) **EP 4 138 212 B1**
(45) Veröffentlichungstag und Bekanntmachung des Hinweises auf die Patenterteilung: **07.05.2025**
(21) Anmeldenummer: 22190591.2
(22) Anmeldetag: 16.08.2022
(51) Int. Cl.: H01Q 1/22, H01Q 21/08, H04Q 9/00

(54) **RADOM-FREIE ANTENNEN-EINHEIT**
RADOME-FREE ANTENNA UNIT
UNITÉ D'ANTENNE SANS RADÔME

(30) Priorität: 18.08.2021 DE 102021121430
(43) Veröffentlichungstag der Anmeldung: 22.02.2023
(73) Patentinhaber: Tempris GmbH, 83607 Holzkirchen (DE)
(72) Erfinder: Mangold, Anton, 82467 Garmisch-Partenkirchen (DE); Schaller, Andreas, 82467 Garmisch-Partenkirchen (DE); Bauer, Alois, 83607 Holzkirchen (DE)
(74) Vertreter: Weickmann & Weickmann PartmbB

(56) Entgegenhaltungen:
- CN-U- 211 350 926
- US-A1- 2020 342 186
- US-A1- 2021 047 919

## Beschreibung

### I. Anwendungsgebiet

Die Erfindung betrifft Antennen, meist Hochfrequenz-Antennen für den Frequenzbereich von 1 GHz bis etwa 40 GHz, die sowohl Senden als auch Empfangen, wie sie insbesondere in druckdichten Räumen angeordnet werden mit einer Kabelverbindung durch die metallische Wandung des druckdichten Raumes nach außen.

### II. Technischer Hintergrund

Ein typischer Anwendungsfall ist der Druckbehälter einer Gefriertrocknungs-Anlage. In diesem ändert sich Prozess-bedingt die Prozesstemperatur von etwa -70 °C bis ca. +120 °C, und der Prozessdruck von Normaldruck oder gar Unterdruck bis in der Regel 3 bar über Normaldruck.

Um von Temperatur-Sensoren, die in den Produkten positioniert sind, die Temperatur drahtlos abzufragen, sendet eine Antenne einer Antennen-Einheit, die meist auf Höhe jeder der Etagen des Druckbehälters eine Antenne umfasst, ein Anfrage-Signal aus, welches dem über keine eigene Energieversorgung verfügenden Temperatur-Sensor auch die Energie liefert, nicht nur die Temperatur zu messen, sondern auch ein die gemessene Temperatur repräsentierendes Antwort-Signal an die Antenne zurückzusenden.

Von der Antennen-Einheit führt eine Kabelverbindung mittels in der Regel Koaxial-Kabeln nach außen, die druckdicht durch die Wandung des Druckbehälters geführt werden muss und außerhalb des Druckbehälters mit einer elektronischen Abfrageeinheit oder der dortigen Steuerung der Gefriertrocknungs-Anlage verbunden ist.

Bekannt ist es, eine Antennen-Einheit zu verwenden, die aufgebaut auf einer Antennen-Basis und geschützt im Inneren eines Radoms, also einem meist kuppelförmigen Schutzgehäuse, untergebracht ist, aufgrund der Überlegung, dass dann die Antennen-Einheit nur eine einzige Dichtungsstelle hat, nämlich zwischen Radom und der Antennen-Basis, die dauerhaft dicht sein muss, abgesehen von der Kabel Durchführung von dort durch die Wand des Druckbehälters.

Das Radom muss jedoch für die Funkwellen durchlässig sein, muss also fast zwangsweise aus Kunststoff bestehen, während alle anderen Teile, insbesondere auch die Antennen-Basis, aufgrund der bestehenden Hygienevorschriften aus Edelstahl bestehen.

Wegen physikalisch völlig unterschiedlichem Verhalten von Kunststoff einerseits und Edelstahl - meist der Sorte 1.4.4.2004/AISI 31GL-FDA/GMP oder 1.4.4.2004/AINSI 316L - andererseits ist bei sich änderndem Druck und/oder Temperatur, bei den genannten Einsatzbedingungen die Aufrechterhaltung der Dichtigkeit auf Dauer ein Problem.

Ferner wollen die Betreiber der Gefriertrocknungs-Anlagen nach Möglichkeit, dass alle Zusatz-Einbauten im Druckbehälter nur aus Materialien bestehen, die ohnehin darin bereits vorhanden und damit zugelassen sind, vor allem unter hygienischen Gesichtspunkten, da in Gefriertrocknungs-Anlagen in der Regel Lebensmittel oder hinsichtlich der Prozess-Bedingungen noch empfindlichere Arzneimittel hergestellt werden.

Die Druckschrift US 2021/047919 A1 offenbart eine Antennen-Einheit gemäß dem Oberbegriff des Anspruchs 1. Ferner wird auf die Druckschriften CN 211 350 926 U und US 2020/342186 A1 hingewiesen.

### III. Darstellung der Erfindung

### a) Technische Aufgabe

Es ist daher die Aufgabe gemäß der Erfindung, eine Antennen-Einheit und insbesondere eine damit ausgestattete Gefriertrocknungs-Anlage sowie ein Verfahren zum Herstellen und Montieren der Antennen-Einheit zur Verfügung zu stellen, die diese Probleme minimiert oder vollständig löst.

### b) Lösung der Aufgabe

Diese Aufgabe wird durch die Merkmale der Ansprüche 1, 16 und 18 gelöst. Vorteilhafte Ausführungsformen ergeben sich aus den Unteransprüchen.

Hinsichtlich der Antennen-Einheit wird diese Aufgabe dadurch gelöst, dass die - meist mehrere einzelne Antennen umfassende - Antennen-Einheit einerseits ein Antennen-Teil umfasst, welches auch die mehreren einzelnen Antennen trägt, sowie ein Zuführungsteil, durch welches ein oder mehrere Kabel, insbesondere Hochfrequenz-Kabel - die jeweils aus mehreren Kabel-Abschnitten hintereinander bestehen können - geschützt dem Antennen-Teil und den dortigen Antennen zugeführt werden.

Dabei ist das Antennen-Teil mittels eines Flansch-Blockes am Zuführungs-Teil befestigt, und zwar lösbar ohne Zerstörung der Verbindung, also beispielsweise durch Lösen einer Verschraubung, was insbesondere in weniger als 1 bis 2 Minuten möglich sein sollte.

Nach Öffnen des Flansch-Blockes - also Trennen der beiden Block-Teile, die meist kappenförmig ausgebildet sind und mit ihren offenen Seiten dicht gegeneinandergepresst werden können - sind die Kabel-Abschnitte der hindurchgeführten Kabel an dieser Stelle zugänglich und leicht lösbar im Flansch-Block miteinander verbunden, mittels je einer Kabel-Kupplung, sei es eine Steckkupplung oder insbesondere einer Steckkupplung, die zusätzlich das Lösen einer Überwurfmutter erfordert. Auf diese Art und Weise können die Kabel-Abschnitte des Zuführungsteils sehr schnell von den Kabel-Abschnitten des Antennenteils gelöst werden.

Beim Einbau beispielsweise in einen Druckbehälter, etwa einer Gefriertrocknungs-Anlage, kann auf diese Art und Weise das Zuführungs-Teil immer fest montiert bleiben, während das Antennen-Teil mit den daran befestigten Antennen leicht gelöst und entfernt werden kann, sei es um es wegen einer defekten Antenne auszutauschen oder die Zugänglichkeit zu dahinterliegenden Teilen im Druckbehälters zu verbessern. Da es sich bei den Antennen in aller Regel um Hochfrequenz-Antennen, etwa im Bereich von 1 GHz bis 40 GHz, handelt, werden als Kabel und Kabel-Abschnitte Koaxial-Kabel verwendet, um ein Abstrahlen von Signalen durch die Kabel selbst zu vermeiden.

Dicht bedeutet in diesem Zusammenhang druckdicht, also gasdicht, insbesondere auch bei Druckdifferenzen, bei denen der tiefste Druck im Unterdruckbereich von bis zu 1/10.000.00 bar, insbesondere 1/1.000.000 bar, liegt, der höchste Druck im Überdruckbereich von 5 bar Überdruck und mehr liegt.

Dabei kann die druckdichte Trennung zwischen unterschiedlichen Räumen gegeben sein:
Zum einen können die Innenräume des Zuführungs-Teiles einerseits und des Antennen-Teiles andererseits mittels des geschlossenen Flansch-Blockes druckdicht voneinander getrennt sein, was dann natürlich zumindest in einem der beiden Block-Teile eine druckdichte Durchführung des dortigen Kabel-Abschnittes durch die Kabel-Durchgangsöffnung des entsprechenden Block-Teiles erfordert.

Auf jeden Fall sind die Innenräume des Zuführungs-Teiles einerseits und des Antennen-Teiles andererseits - egal ob sie bei geschlossenem Flansch-Block druckdicht voneinander getrennt sind oder drucktechnisch miteinander verbunden sind und einen Innenraum bilden - druckdicht gegenüber der Umgebung von Zuführungs-Teil einerseits und/oder Antennen-Teil andererseits abgedichtet.

Bei Einbau der Antennen-Einheit in einer Druckkammer, z.B. einer Gefriertrocknungs-Anlage oder einer Sterilisierungs-Anlage - kann dennoch in einem solchen montierten Zustand der Innenraum des Zuführungs-Teiles und/oder des Antennen-Teiles eine Verbindung zur Umgebung der Druckkammer aufweisen.

Als Kabel-Kupplung wird vorzugsweise eine SMA-Kupplung verwendet, wobei vorzugsweise das Antennen-seitige Kupplungs-Teil der Kabel-Kupplung, insbesondere SMA-Kupplung, im Antennen-Teil, insbesondere dem Antennen-seitigen Blockteil des Flansch-Blockes, nicht nur wie üblich durch Verschrauben daran fixiert, sondern gegenüber diesem druckdicht verklebt oder verschweißt ist.

Dadurch entsteht keine Undichtigkeit am Kabel-Ausgang z.B. des Antennen-Teiles.

Vorzugsweise umfasst das Antennen-Teil einen hohlen, insbesondere rohrförmigen, Tragkörper, der vorzugsweise aus Metall, insbesondere Edelstahl, besteht, wobei vorzugsweise für die gesamte Antennen-Einheit so weit als möglich das gleiche Material, insbesondere die gleiche Edelstahl-Sorte, wie für den Druckbehälter selbst verwendet wird.

Durch den hohlen Tragkörper werden vom Flansch-Block aus die entsprechenden Kabel-Abschnitte zu den meist mehreren am Tragkörper dicht befestigten Antennen geführt, wobei ein vom Flansch-Block kommender Kabel-Abschnitt sich auch im Tragkörper verzweigen kann und mehrere Antennen versorgt, die dann durch einen Antennen-Multiplexer, der meist in der Steuerung enthalten ist, die Antennen zeitversetzt aktiviert.

Damit der hohle Tragkörper dicht gegenüber der Umgebung ist, sind die einzelnen Antennen so an oder auf oder über einem jeweiligen Durchbruch in der Wandung des Tragkörpers, durch welches das Kabel die Rückseite der Antenne erreicht, befestigt, dass dieser Durchbruch durch die Antenne druckdicht verschlossen wird. Dabei besteht die Antenne vorzugsweise aus dem gleichen Material, vorzugsweise Edelstahl, wie der Tragkörper und kann dadurch mit dem Tragkörper verschweißt werden.

Der auffälligste Unterschied zu bisherigen Lösungen besteht darin, dass die Antennen-Einheit und insbesondere deren Antennen-Teil keine die einzelnen Antennen druckdicht umgebende Schutzhülle in Form eines Radoms aufweist, welches druckdicht mit einer Antennen-Basis oder dem Antennen-Tragkörper verbunden ist.

Zwar kann das Antennen-Teil eine Schutzvorrichtung aufweisen, um die am Antennen-Teil vorhandenen Antennen rein mechanisch vor Beschädigung zu schützen, jedoch bewirken diese keine dichte Schutzhülle um das Antennenteil herum.

So kann die Schutzvorrichtung nur ein Gitter oder auch nur im Wesentlichen parallel zu dem rohrförmigen Tragkörper verlaufende, um diesen herum außerhalb der Antennen angeordnete Schutzstäbe umfassen, die kein Problem bei der meist automatisch durchgeführten Reinigung des Innenraums des Druckbehälters darstellen, da sie von allen Seiten zugänglich sind, meist frei nach unten auslaufen und Reinigungsflüssigkeit nach unten frei abtropfen kann.

Da das Abstrahlen der elektromagnetischen Strahlung durch die Antenne hierdurch nicht erschwert werden darf, besteht eine solche Schutzvorrichtung wie ein Gitter oder Schutzstäbe meist aus Kunststoff, aus Gründen der mechanischen Festigkeit beispielsweise aus PEEK bzw. Polyetheretherketon.

Die einzelnen Antennen selbst bestehen in der Regel aus einem - meist plattenförmigen - Radiator, also dem eigentlichen Sender und Empfänger der Antenne, sowie einer entgegen der Abstrahl-Richtung dahinter im Abstand angeordnete Reflektor-Platte, die meist größer ist als der plattenförmige Radiator und deren Aufgabe darin besteht, die im Bereich um den Radiator herum ankommenden elektromagnetischen Wellen des Antwortsignals zu reflektieren in Richtung Radiator und damit dessen Nutzsignal zu verbessern, insbesondere zu verstärken.

Plattenförmig bedeutet in diesem Fall weder, dass es sich um ebene Platten handeln muss, noch, dass es sich um geschlossene oder massive Platten handeln muss. Abhängig von der Frequenz und damit der Wellenlänge der verwendeten Strahlung können sowohl die Reflektor-Platte als auch ein plattenförmiger Radiator durchaus eine Vielzahl von Durchbrüchen aufweisen. Insbesondere kann das Antennenschutzrohr ganz oder teilweise den Reflektor bilden.

Vorzugsweise bestehen sowohl die Reflektor-Platte als auch der Radiator und/oder die Abstands-Hülse aus dem gleichen Material, insbesondere aus dem gleichen Material wie der Druckbehälter.

Vorzugsweise ist an der vom Radiator abgewandten Rückseite der Reflektorplatte ein Kupplungsteil einer Kabel-Kupplung befestigt, an welche der Kabel-Abschnitt im Tragkörper angeschlossen, z.B. angesteckt, werden kann vor oder nach dem Verschweißen der Reflektor-Platte am Tragkörper zum Abdichten des entsprechenden Durchbruchs.

Der Abstand zwischen der Reflektorplatte und dem Radiator kann durch einen zwischen Reflektor-Platte und Radiator verlaufenden Kabel-Abschnitt überbrückt sein - der insbesondere fest und dauerhaft am Radiator befestigt ist, beispielsweise verlötet oder verschweißt ist - oder auch dadurch, dass diese Kabel-Kupplung so ausgebildet ist, dass sie sich von der Rückseite der Reflektorplatte durch diese hindurch und bis zur Rückseite des Radiators erstreckt, wo der Innenleiter des Koaxialkabels die Hochfrequenz-Schwingung in den Radiator einkoppelt.

Um den Innenraum des Tragkörpers abzudichten, muss dann
- entweder ein solcher Kabel-Abschnitt oder Teil der Kabel-Kupplung dicht eingehaust sein, etwa durch eine Abstandshülse durch druckdichten Anschluss sowohl an der Reflektorplatte als auch dem Radiator
- oder die, insbesondere druckdichte, Kabel-Kupplung muss druckdicht an der Durchlassöffnung der Reflektorplatte für die Kupplung bzw. das Kabel befestigt sein, beispielsweise indem die in der Regel durch Verschrauben an der Rückseite der Reflektorplatte befestigte Kupplungs-Flanschplatte nach dem Verschrauben zusätzlich gegenüber der Reflektorplatte verschweißt oder verklebt wird
- oder die Trägerplatte mit einer eingeschweißten oder eingelöteten vakuumdichten Hochfrequenz-Durchführung versehen sein

Im zweiten beschriebenen Fall muss ferner durch Zusatzmaßnahmen sichergestellt werden, dass zwischen dem auf der Radiator-Seite der Kabel-Kupplung vorstehenden Innenleiter und der umgebenden Kabel-Kupplung keine Undichtigkeit in das Kabel und damit den Innenraum des Tragkörpers hinein entsteht.

Dies lässt sich beispielsweise mit Bauformen der Kabel-Kupplung, insbesondere einer SMA-Kupplung, erreichen, bei denen entlang des Innenleiters keine Undichtigkeit in Form einer Durchgangsöffnung durch die Kabel-Kupplung hindurch besteht.

So sind Kabel-Kupplungen möglich mit einer kapazitiven Hochfrequenz-Kopplung der beidseitigen Innenleiter über ein Bindeglied aus einem elektrischen Isolator, beispielsweise sogenannte Glas-Durchführungen, bei denen der elektrische Isolator, beispielsweise eine Glas-Platte oder Glas-Kugel, druckdicht im umgebenden Kupplungs-Gehäuse eingeschweißt ist, an die beidseits der Innenleiter heranreicht und diese kontaktiert und dadurch die Hochfrequenz des anliegenden Wechselstromes über den elektrischen Isolator hinweg durchgegeben wird.

Unabhängig davon kann eine Kabel-Kupplung aus zwei Kupplungs-Teilen bestehen, an denen jeweils ein Kabelabschnitt befestigt ist, die dann miteinander gekoppelt werden durch direkte Verbindung der beiden Kupplungs-Teile gegeneinander.

Darüber hinaus kann eine Kabel-Kupplung auch drei Kupplungs-Teile aufweisen, nämlich ein zusätzliches Mittelstück - welches häufig als Adapter ausgebildet ist - an dessen beiden Seiten je eines der beiden mit einem Kabelabschnitt verbundenen weiteren Kupplungs-Teile befestigt wird.

An einem der zwei oder drei Kupplungs-Teile kann ein radial vorstehender Kupplungs-Flansch vorhanden sein, der der Fixierung, insbesondere Verschraubung, an einem Bauteil der Umgebung dient, wodurch dann die gesamte Kupplung positioniert wird.

Alternativ kann der Radiator auch lösbar an der Reflektor-Platte befestigt sein, insbesondere verschraubt sein, insbesondere durch Abstandshalter, die beabstandet, insbesondere versetzt, zur Kabelverbindung montiert sind.

Der hohle Tragkörper ist somit umfänglich durch seine Wände und die darin vorhandenen, aber durch die Antennen druckdicht verschlossenen, Durchbrüche verschlossen, am einen stirnseitigen Ende durch ein Block-Teil des Flansch-Blockes, und am gegenüberliegenden stirnseitigen Ende durch eine im wesentlichen geschlossene Stirnwand.

Vorzugsweise ist im unteren Bereich, insbesondere am tiefsten Punkt, des hohlen Tragkörpers - bei aufrechtstehenden rohrförmigen Tragkörper, der am oberen Ende mit dem Zuführung-Teil dicht verbunden ist, in der unteren Stirnwand - eine Zugangsöffnung vorhanden, die jedoch druckdicht verschließbar ist, indem sie beispielsweise als Gewindeöffnung ausgebildet ist in die ein Verschlussstopfen dicht eingeschraubt werden kann.

Diese im Normalbetrieb verschlossene Zugangsöffnung kann im offenen Zustand für unterschiedliche Zwecke benutzt werden:
So kann daran eine Begasungs-Vorrichtung dicht angeschlossen werden, über die ein inertes Gas wie etwa Helium in das Innere des Tragkörpers eingebracht werden kann, um in der Umgebung des Tragkörpers mittels entsprechender Sensoren zu detektieren, ob dort dieses Gas vorhanden ist, was dann nur durch eine Undichtigkeit im Tragkörper dorthin gelangt sein könnte.

Eine Dichtigkeitsprüfung kann auch auf andere Art und Weise erfolgen, beispielsweise durch Beaufschlagen des Inneren des Tragkörpers über die Zugangsöffnung mit Gas mit einem vorgegebenen Haltedruck, der innerhalb einer vorgegebenen Zeit nicht unter einen definierten Schwellenwert absinken darf.

Auch Kondensflüssigkeit kann über eine solche Zugangsöffnung abgelassen werden.

Der Flansch-Block, der die beiden Teile der Antennen-Einheit dicht verbindet, umfasst meist zwei dicht gegeneinander pressbare, insbesondere druckdicht gegeneinander verschraubbare, kappenförmige Blockteile mit je einer Durchgangsöffnung für das oder die Kabel.

In dem freien Innenraum, der durch die beiden mit ihrem Kappenrand gegeneinander gepressten Blockteile entsteht, ist groß genug zur Aufnahme einer Kabel-kupplung, indem je ein Kupplungsteil an einem der durch eine der Durchgangsöffnungen in den Flansch-Block eingeführten Kabel befestigt ist. In dem jedes der beiden Kupplungsteile in dem es tragenden Blockteil dicht befestigt ist, insbesondere in dieses eingeklebt oder eingeschweißt ist, werden bei dicht geschlossenem Flansch-Block Zuführungs-Teil und Antennen-Teil hinsichtlich ihrer Innenräume dicht voneinander getrennt, sodass auch beim Abnehmen des Antennen-Teils hierdurch der Innenraum des Zuführungsteils nicht geöffnet wird und vorzugsweise auch umgekehrt. Zusätzlich kann mit einer Verschlusskappe das Zuführungs-Teil mit seinen offenen Steckverbinden hermetisch verschlossen werden.

Eingeschweißt bedeutet in diesem Fall, dass lediglich ein umfängliches Einschweißen des Kupplungs-Teiles gegenüber dem Blockteil erforderlich ist, kein allseitig umschließendes Einschweißen.

Vorzugsweise bestehen die beiden Blockteile aus dem gleichen Material, insbesondere auch dem gleichen Material wie das angrenzende Zuführungs-Teil und/oder Tragteil des Antennenteils, insbesondere Edelstahl, und vorzugsweise dem gleichen Material aus dem der Druckbehälter besteht.

Das Zuführungs-Teil weist einen beidseits stirnseitig offenen, rohrförmigen Zuführungskörper auf, in dem das wenigstens eine Kabel verläuft, welches die Steuerung mit dem Radiator der Antenne verbindet.

Ferner ist an dem einen stirnseitigen offenen Ende des Zuführungskörpers, nämlich dem Antennen-seitigen Ende, eines der Blockteile des Flansch-Blockes druckdicht befestigt, insbesondere verschweißt.

Am gegenüberliegenden, Antennen-abgewandten Ende des Zuführungskörpers ist eine Wand-Durchführung vorhanden, mit dem sich der Zuführungskörper durch eine entsprechende Ausnehmung in der Wand des Druckbehälters hindurch erstrecken kann und gegenüber dieser Wand abgedichtet werden kann.

Diese Wand-Durchführung kann integraler Bestandteil des Zuführungskörpers sein, indem es beispielsweise eine ringförmige Platte ist, die gegenüber dem Außenumfang des rohrförmigen Zuführungskörpers dicht verschweißt ist, um an der Wand des Druckbehälters um einen Wandeldurchlass herum abgedichtet angelegt und fixiert zu werden.

Auch hier besteht die Wand-Durchführung vorzugsweise aus dem gleichen Material wie der Zuführungskörper, an dem sie befestigt ist.

Das Zuführungs-Teil kann ein formhaltiges Teil sein wie etwa ein gerades oder gekrümmtes, umfänglich druckdichtes Rohr, oder ein umfänglich druckdichter, flexibler Schlauch wie etwa ein Edelstahl-Wellschlauch.

Ein gerades Rohr wäre zu bevorzugen, ist jedoch nicht immer realisierbar, da die Soll-Position des Antennen-Teiles im z.B. Druckbehälter in aller Regel nicht fluchtet mit der Durchgangsöffnung in der Wand für das Zuführungs-Teil.

Das Antennen-Teil und/oder das Zuführungs-Teil kann auch eine Entfeuchtungs-Einheit umfassen, um beispielsweise durch Kondensation in deren Innenraum entstandene Feuchtigkeit zu entfernen oder zu binden, beispielsweise mittels eines Feuchtigkeit absorbieren Stoffes wie etwa Silica-Gel.

Vorzugsweise ist ein solcher Stoff dann austauschbar in einem Entfeuchtungs-Behälter angeordnet, beispielsweise als wechselbare Patrone, und dieser Behälter steht über eine dichte Verbindung mit dem Innenraum des Antennen-Teils und/oder des Zuführung-Teils in Verbindung, wobei auch zusätzlich eine Luftströmung, etwa eine ringförmige Luftströmung, zwischen beiden aktiv erzeugt werden kann, beispielsweise über zwei dichte Verbindungen zwischen deren Entfeuchtungs-Behälter und dem jeweiligen Innenraum.

Da für bestimmte Arbeiten am Montageort die Antennen-Einheit, zumindest deren Antennen-Teil, störend sein kann, kann dieses Antennen-Teil auch im fertig montierten Zustand der Antennen-Einheit aus seiner Betriebs-Position in eine Park-Position verlagert, insbesondere verschwenkt, werden, vorzugsweise zusammen mit dem Zuführung-Teil.

Um die an dem Antennen-Teil befestigten Antennen möglichst exakt hinsichtlich der Abstrahl-Richtung einstellen zu können, kann der Tragkörper des Antennen-Teils auch im fertig montierten Zustand der Antennen-Einheit um seine größte Erstreckungsrichtung, also seine Längsachse, relativ zum Zuführungs-Teil verschwenkt ausgebildet sein und in jeder gewünschten Schwenklage fixierbar sein.

Eine Gefriertrocknungs-Anlage umfasst üblicherweise einen temperierbaren und hinsichtlich des Druckes steuerbaren Druckbehälter sowie eine außerhalb des Druckbehälters angeordnete elektronische Steuerung, wobei eine Antennen-Einheit im Inneren des Druckbehälters angeordnet sein kann, um darin drahtlos die Temperatur von einer Vielzahl dort angeordneter, im Produkt oder dessen Behältern positionierter Temperatursensoren abzufragen,

Bei einer solchen Gefriertrocknungs-Anlage wird die bestehende Aufgabe dadurch gelöst, dass die Antennen-Einheit nach einem der vorhergehenden Ansprüche ausgebildet ist.

Um vor allem den Antennen-Teil exakt in einer Soll-Lage im Inneren des Druckbehälters anordnen zu können, umfasst dieser in seinem Inneren vorzugsweise eine Haltevorrichtung, an der die Antennen-Einheit, vorzugsweise lediglich deren Antennen-Teil, lösbar und beweglich, aber in jeder möglichen Lage fixierbar, befestigt werden kann.

Der Wanddurchlass in der Wand des Druckbehälters für die Antennen-Einheit kann dabei - abgestimmt auf die Größe und Gestalt der Wanddurchführung der Antennen-Einheit - so gestaltet sein, dass die Antennen-Einheit, insbesondere deren Zuführung-Teil von innen oder von außen durch den Wanddurchlass steckbar ist.

Hinsichtlich des Verfahrens zum Herstellen einer wie oben beschriebenen Antennen-Einheit mit einem Antennen-Teil und einen Zuführungs-Teil für Kabel zum Antennen-Teil, insbesondere einem wie zuvor beschriebenen Antennen-Teil, wird diese Aufgabe dadurch gelöst, dass zum Herstellen des Antennen-Teils
- das Kabel in den Tragkörper des Antennen-Teils eingeführt wird,
- das Antennen-seitige Ende des Kabels aus dem Durchbruch heraus vorstehend mit der Antenne, insbesondere deren Kabelstück, verbunden wird,
- die Antenne als Verschluss des Durchbruchs dicht auf oder in diesem befestigt wird.

Vorzugsweise wird dabei die Antenne auf dem Durchbruch verschweißt.

Das Antennen-seitige Ende des Kabels kann dabei durch lösbares Kontaktieren oder lösbar nur unter Zerstörung der Verbindung, insbesondere durch Verlöten oder Verschweißen, mit der Antenne verbunden werden.

Hinsichtlich des Verfahrens zum Montieren einer insbesondere wie oben beschriebenen Antennen-Einheit mit einem Antennen-Teil und einen Zuführungs-Teil in einer insbesondere wie oben beschriebenen Gefriertrocknungsanlage wird die bestehende Aufgabe dadurch gelöst, dass
- das Zuführungs-Teil mit wenigstens einem Kabel-Abschnitt darin im Wand-Durchlass des Druckbehälters dicht befestigt wird,
- das Antennen-Teil davor oder danach mit wenigstens einem Kabel-Abschnitt darin in einer Soll-Lage im Druckbehälter positioniert und insbesondere an einer Halte-Vorrichtung des Druckbehälters fixiert wird,
- Zuführungs-Teil und Antennen-Teil über einen Flansch-Block mechanisch druckdicht sowie hinsichtlich ihrer Kabel-Abschnitte miteinander verbunden werden.

Vorzugsweise wird dabei das Zuführungs-Teil von außen in den Wand-Durchlass des Druckbehälters eingesteckt und druckdicht gegenüber der Wand des Druckbehälters fixiert.

### c) Ausführungsbeispiele

Ausführungsformen gemäß der Erfindung sind im Folgenden beispielhaft näher beschrieben. Es zeigen:
- **Figur 1a, b:**: die Antennen-Einheit in zwei um 90° verschiedenen Seitenansichten,
- **Figur 2a:**: den Antennen-Teil geschnitten entlang der Linie II - II,
- **Figur 2b:**: eine Ausschnitt-Vergrößerung aus. **Figur 2a****,**
- **Figur 3:**: einen Axial-Schnitt durch den Flansch-Block zwischen Zuführungs-Teil und Antennen-Teil,
- **Figur 4:**: in Vergrößerung gegenüber den Figuren 1a, b das Antennen-abgewandte Ende des Zuführungs-Teiles beim befestigt in der Wandung des Druckbehälters z.B. einer Gefriertrocknungs-Anlage.

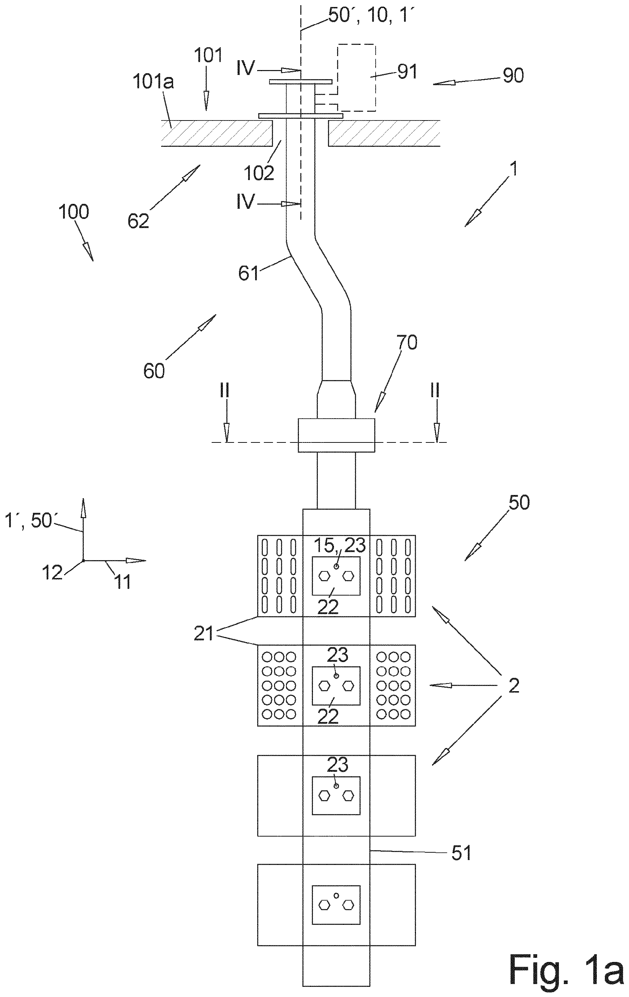

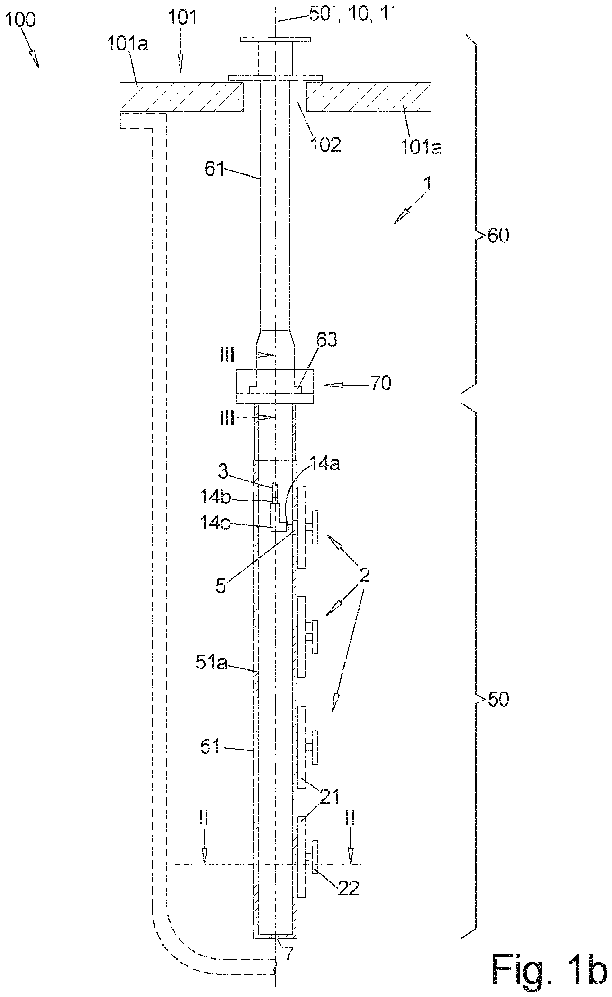

Die **Figuren 1a****,** **b** zeigen, dass die Antennen-Einheit 1 aus zwei - in axialer Richtung aufeinanderfolgenden - länglichen, balkenförmigen Teilen besteht, nämlich zum einen dem Antennen-Teil 50, an dem sich die Antennen 2 befinden, und dem Zuführungs-Teil 60.

Denn der Sinn der Konstruktion besteht darin, die Antennen-Einheit 1 selbst dicht auszubilden einschließlich der Durchführung der Kabel durch den Durchlass 102 des Druckbehälters 100, um dadurch auf die üblicherweise als Radom bezeichnete dichte, an der Innenseite der Wandung des Druckbehälters befestigte, Abdeckhaube - wie in **Figur 1b** gestrichelt angedeutet - verzichten zu können und eine bessere Montierbarkeit und Zugänglichkeit zur Antennen-Einheit 1 sicherzustellen.

Zu diesem Zweck müssen die Verbindungen zwischen dem hohlen rohrförmigen Zuführungskörper 61 des Zuführungs-Teils 60 und dem hohlen, zumindest einseitig offenen, Trag-Körper 51 des Antennen-Teils 50 dicht ausgebildet sein und ebenso die Befestigung der Antennen 2 außen auf dem Trag-Körper 51.

Die Haupt-Erstreckungsrichtung der Antennen-Einheit 1, also diejenige Richtung, in der diese ihre Größe der Ausdehnung besitzt, wird als Längsrichtung 1' definiert und ist meist identisch mit der Längsrichtung 50' des Antennen-Teils 50, da dessen Trag-Körper 51 meist gerade ist, während der Zuführungskörper 61 auch ein oder mehrfach geköpft sein kann, wie in **Figur 1a** ersichtlich. Da die Antennen-Einheit 1 oft von einer oberen Wandung 101a des Druckbehälters 101 herabhängend montiert ist, ist die Längsrichtung 1' oft identisch mit der Vertikalen 10.

Aus Gründen der Montage-Freundlichkeit und Reparatur-Freundlichkeit wird meist zuerst der Zuführungskörper 61 im Durchlass 102 der Wandung 101a des Druckbehälters 101 montiert, meist eingesteckt in den Durchlass 102 vom Äußeren des Druckbehälters 101 her.

Danach wird der vorgefertigte Antennen-Teil 50 daran befestigt, also der Trag-Körper 51 mit daran befestigten Antennen 2 einschließlich der bereits mit den Antennen verbundenen, in dem Trag-Körper 51 befindlichen Kabel-Abschnitten 3.50 der Kabel 3, die bis zum oberen offenen Ende des Trag-Körpers 51 reichen.

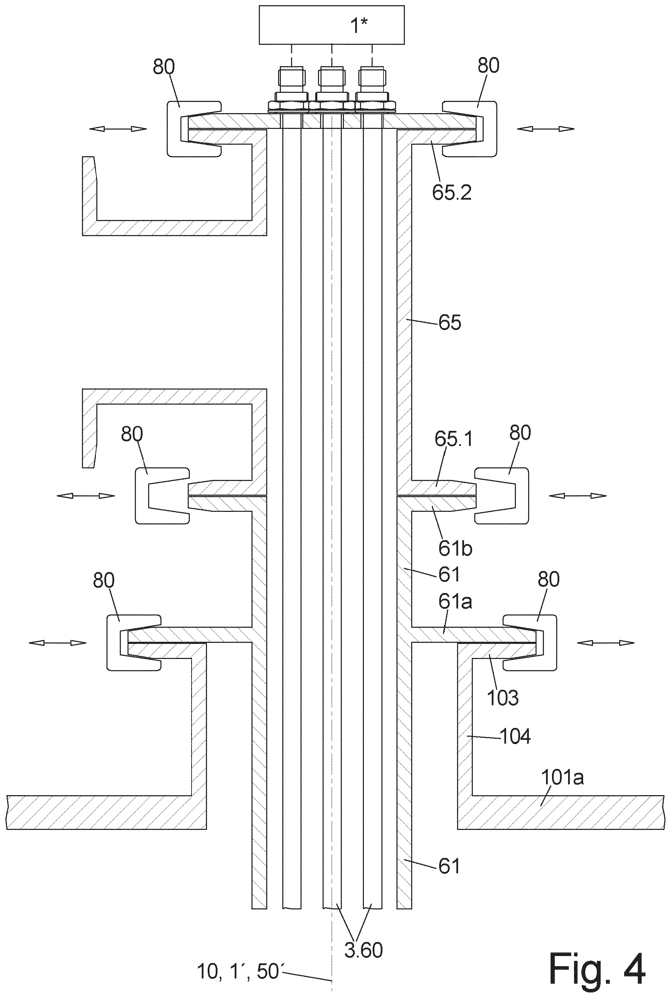

Der Antennen-Teil 50 umfasst einen hohlen, rohrförmigen - in diesem Fall mit rechteckigem Querschnitt - Tragkörper 51 und das Zuführungs-Teil 60 einen hohlen Zuführungskörper 61, denn die Antennen 2 müssen jeweils mit einem Kabel 3 verbunden werden - wie an der obersten der vier Antennen 2 in Figur 1b beispielhaft dargestellt - welches, von unten nach oben, zunächst im Trag-Körper 51 und danach im Zuführungskörper 61 verläuft und sich durch einen Durchlass 102 in der Wandung 101a eines Druckbehälters 101 erstreckt, sodass das Kabel außerhalb des Druckbehälters 1 mit einem nur in der **Figur 4** angedeuteten elektronischen Abfragesystem *1** der Antennen-Einheit 1 der Anlage, zu der der Druckbehälter 101 gehört, verbunden werden kann.

Im unteren, geschlossenen Ende des Trag-Körpers 51 kann sich eine Zugangsöffnung 7, insbesondere eine Gewindeöffnung 7, befinden, die der Zugänglichkeit ins Innere des Trägerteils 51 dient, beispielsweise um das Innere mit Schutzgas zu begasen oder für andere Zwecke.

**Figur 1b** zeigt ferner im oberen Bereich des Zuführung-Körpers 61 an dessen Außenseite eine Entfeuchtungs-Einheit 90 mit einem Entfeuchtungs-Behälter 91 mit einem viel Feuchtigkeit aufsaugenden Inhaltsstoff, der mit dem Inneren des Zuführungskörpers 61 in Verbindung steht und dort vorhandene Feuchtigkeit aufnimmt.

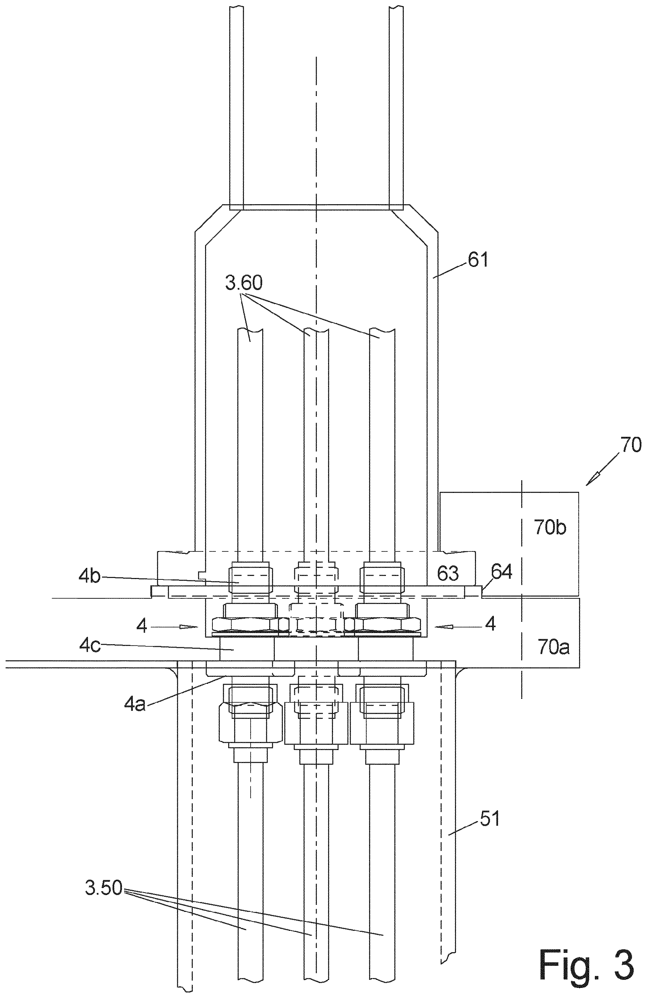

Gemäß **Figur 3** wird das obere, offene Ende des hohlen Trag-Körpers 51 mit dem unteren, offenen Ende des Zuführungskörpers 61 dicht verbunden mittels eines Kupplungs-Blockes 70, der zwei Blockteile 70a, b aufweist, die in Längsrichtung 50' dicht gegeneinandergepresst werden können.

Dabei ist in diesem Fall das untere Blockteil 70a auf die obere Stirnfläche des Trag-Körpers 51 aufgesetzt und umlaufend dicht mit diesem verschweißt, wobei dieses platten-förmige, untere Blockteil 70a meist schalenförmig mit einer nach oben offenen Einsenkung ausgebildet ist, aber vor allem in Längsrichtung 50' verlaufende Durchgänge aufweist, in die jeweils ein Zwischenstück 4c, vorzugsweise dicht, eingeschraubt ist, welches sowohl zur Seite des Zuführungskörpers 61 als auch zur Seite des Trag-Körpers 51 hin ein Kupplungsteil aufweist, auf welches ein Kupplungsteil 4a, b am Ende eines Kabelabschnitts 3.50 bzw. eines Kabelabschnitts 3.60 aufgeschraubt werden kann..

Der obere, ringförmige Blockteil 70b kann von oben gegen einen radial nach au-ßen vorstehenden, ringförmigen Flansch 63 am unteren Ende des Zuführungs-Teiles 61 gedrückt werden und dieser auf eine Dichtung 64, die sich zwischen diesem Flansch 63 und dem unteren Blockteil 70a befindet.

Im Inneren des Kupplungs-Blockes 70 sind die von unten aus dem Trag-Körper 51 herangeführten Kabel-Abschnitte 3.50 mit den von oben aus dem Zuführungskörper 61 herangeführten Kabel-Abschnitten 3.60 über die Kabel-Kupplungen 4, meist einer SMA-Kupplung, elektrisch miteinander verbunden.

Wie **Figur 1b** zeigt, bestehen die einzelnen Antennen 2 jeweils aus einer Reflektorplatte 21, die dicht am Trag-Körper 51 befestigt ist, sowie einem Radiator 22, der gegebenenfalls plattenförmig ausgebildet ist und sich auf der dem Tragkörper 51 abgewandten Vorderseite 21a der Reflektorplatte 21 und im Abstand zu diesem befindet.

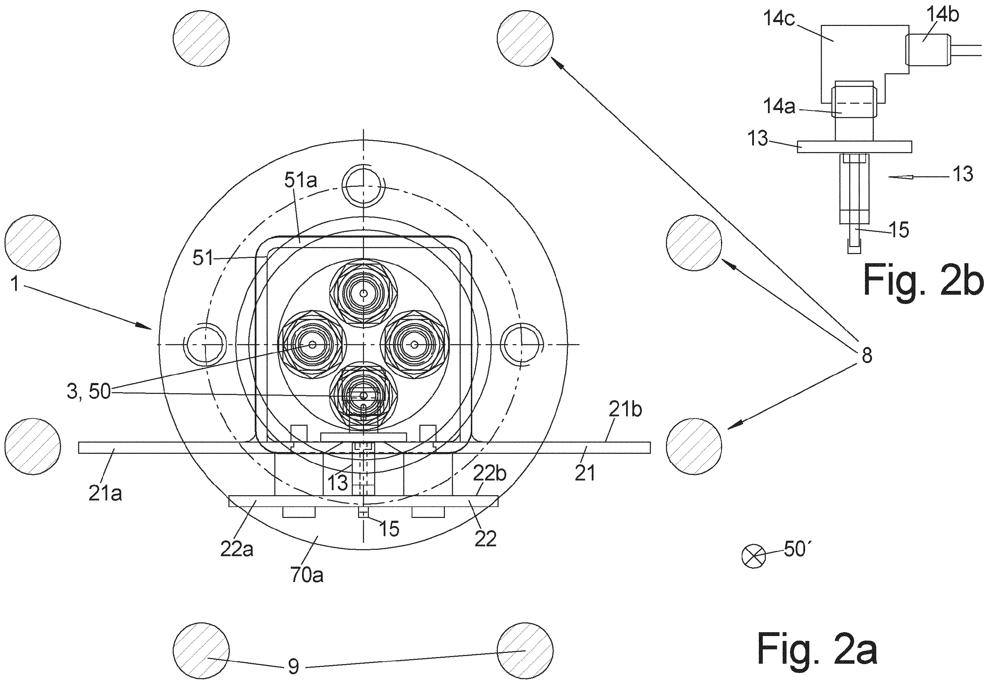

Für die dichte Verbindung wurde - wie am besten **Figur 2a** zeigt - die eine Seitenwand des Tragkörpers 51 über eine solche Länge entfernt, dass eine in axialer Richtung entsprechend lange Reflektorplatte 21 auf den dann in diesem Bereich verbleibenden U-förmigen Querschnitt des Tragkörpers 51 passt und umlaufend mit dem Tragkörper 51 dicht verschweißt werden kann.

Dies geschieht in aller Regel, nachdem an der Reflektor-Platte 21 der Radiator 22, einschließlich des Einkoppelstückes 15 mit dem daraus vorstehenden Koppelstift 15 in einem Durchbruch 5 der Reflektorplatte 22 - die einen Teil der Wandung des Trag-Körpers 51 bildet - befestigt ist, wobei der Koppelstift 15 an der dem Trag-Körper 51 zugewandten Rückseite 22b des Radiator 22 am Einspeisepunkt 23 diesen kontaktiert und die Hochfrequenzschwingung in den Radiator 22 einbringt.

Denn nach dem Verschweißen der Reflektorplatte 21 am Profil des Tragkörpers 51 wäre die Zugänglichkeit äußerst schlecht.

Abseits des Einspeisepunktes 23 ist der Radiator 22 über in diesem Fall zwei Verschraubungen 24 durch Distanzhülsen 25, die zwischen dem Radiator 22 und der Reflektor-Platte 21 angeordnet sind, verschraubt an einer solchen Position, an der der mit der aufgegebenen Hochfrequenz schwingende Radiator 22 einen Wellenknoten aufweist.

Auf das bei der jeweiligen Antenne 2 von deren Einkoppelstück 15 rückseitig und damit quer zur Längsrichtung 50' abragende Kupplungsteil 14a ist ein Winkelstück 14c aufgeschraubt, an dem über ein Kupplungsteil 14b ein Kabel-Abschnitte 3.50 befestigt werden kann, welcher von dort im Inneren des Tragkörpers 51 bis zu dessen offenen, dem Zuführungskörper 61 zugewandten, Ende verläuft.

**Figur 2a** zeigt weiter, dass die vier Kabel-Kupplungen zum Verbinden je eines Kabel-Abschnittes 3.50 mit je einem Kabel-Abschnitt 3.60 im Viereck angeordnet. Innerhalb des Durchlasses des Blockteils.

**Figur 2a** zeigt ferner die rein mechanische Schutzvorrichtung 8, um die Antennen-Einheit 1 herum, die hier aus in axialer Richtung 1' verlaufenden, im Kreis außen um die Antennen-Einheit 1 herum verteilt angeordneten Schutz-Stäben 9 besteht, wovon jeweils eine neben der in Längsrichtung 50' des Antennen-Teils 50 verlaufenden Seitenkante der Reflektor-Platten 21 verläuft.

Die Platzverhältnisse im Inneren eines solchen Druckbehälters 101 sind meist sehr beengt, da sich in diesem eine Reihe von Einbauten befinden, an denen nicht selten Wartungsarbeiten und Reparaturen durchgeführt werden müssen. Die Schutzvorrichtung 8 verhindert, dass dabei durch einen Monteur oder ein im Druckbehälter 101 bewegtes Teil die Antennen-Einheit 1 beschädigt wird.

Die **Figur 4** zeigt das Befestigen das Zuführungskörpers 61 an der Wandung 101a des Druckbehälters 101 so, dass die darin befindlichen Kabel-Abschnitte 3.60 sich durch den Durchlass 102 in der Wandung 101a des Druckbehälters 101 hindurch erstrecken, wobei der Durchlass 102 groß genug sein muss um beim Einführen von außen den Flansch 63 am unteren Ende des Zuführungskörpers 61 hindurchführen zu können.

Zu diesem Zweck weist der Zuführungskörper 61 an seinem Antennen-abgewandten Endbereich nicht nur an seinem Ende einen von seiner Wandung ringförmig nach radial außen vorstehenden Flansch 61b auf, sondern davon zurückversetzt einen weiteren Flansch 61a.

Ferner ist am Durchlass 102 von der Wandung 101a des Druckbehälters 101 nach außen versetzt mittels eines Rohrstutzens 104 am freien Ende des Rohrstutzens ein nach radial außen abragender, ringförmiger Flansch 103 vorhanden, dessen Außendurchmesser dem Durchmesser des Flansches 61a entspricht.

Nach Durchfädeln des Antennen-seitigen Endes des Zuführungskörpers 61 von außen durch den Durchlass 102 in der Wand 101a liegen die Flansche 61a und 103 axial aufeinander und können z.B. durch eine von radial außen angepresste, Klemmvorrichtung 80 radial dicht - gegebenenfalls mit einer dazwischen angeordneten Dichtung - aufeinandergepresst werden.

Diese bekannten Klemmvorrichtungen 80 bestehen aus zwei gelenkig miteinander verbundenen Halbringen, die jeweils einen U-förmigen Querschnitt besitzen, wobei die freien Enden der Halbringe durch eine Spannschraube gegeneinandergepresst werden können. Das axiale Verpressen der Flansche gegeneinander erfolgt durch die konischen Flanken des U-förmigen Querschnittes, und den analog konischen, vom jeweils anderen Flansch abgewandten, Außenseiten der beiden gegeneinander zu pressenden Flansche, die somit nach radial außen dünner werden.

Der am Ende des Zuführungskörpers 61 vorhandene Flansch 61b dient dazu, um z.B. auf die gleiche Art und Weise einen Flansch 65.1 eines Rohr-förmigen Fortsetzungs-Teiles 65, sei es eine gerade Muffe oder wie in der linken Bildhälfte dargestellt ein T-Stück, dicht ansetzen zu können, durch welche die Kabel-Abschnitte 3.60 weiter verlaufen können.

Das Fortsetzungs-Teil 65 kann auch eine die stirnseitige Öffnung des Zuführungs-Teils 61 verschließende Deckelplatte sein, an oder in der die freien Enden der Kabel-Abschnitte 3.60 mit entsprechenden Steckerteilen oder Buchsenteilen befestigt sind.

### BEZUGSZEICHENLISTE

- 1: Antennen-Einheit
- 1*: elektronisches Abfragesystem.
- 1': axiale Richtung
- 2: Antenne
- 3: Kabel
- 3.50: Kabel-Abschnitt
- 3.60: Kabel-Abschnitt
- 4: Kabel-Kupplung
- 4a, b: Kupplungs-Teil
- 4c: Zwischenteil
- 5: Durchbruch
- 6: Abstands-Hülse
- 7: Zugangsöffnung, Gewindeöffnung
- 8: Schutzvorrichtung
- 9: Schutzstab
- 10: Vertikale
- 11: 1. insbesondere horizontale, Querrichtung
- 12: 2. insbesondere horizontale, Querrichtung
- 13: Einkopplungsstück
- 14: Kabel-Kupplung
- 14a, b: Kupplungs-Teil
- 14c: Winkelstück
- 15: Koppelstift

- 21: Reflektor-Platte
- 21a: Vorderseite
- 21b: Rückseite
- 22: Radiator
- 22a: Vorderseite
- 22b: Rückseite
- 23: Einspeisepunkt
- 24: Verschraubung
- 25: Distanzhülse

- 50: Antennen-Teil
- 50': Längsrichtung
- 51: Trag-Körper
- 51a: Wandung

- 60: Zuführungs-Teil
- 61: Zuführungskörper
- 61a, b: Flansch
- 62: Kabel-Durchführung
- 63 64: Dichtung
- 65: Muffe
- 65.1: Flansch

- 70: Flansch-Block
- 70a, b: Blockteil

- 80: Klemmvorrichtung

- 90: Entfeuchtungs-Einheit
- 91: Entfeuchtungs-Behälter

- 100: Gefriertrocknungs-Anlage
- 101: Druckbehälter
- 101a: Wandung
- 102: Durchlass
- 103: Flansch
- 104: Rohrstutzen

## Patentansprüche

1. **Antennen-Einheit** (1) mit
- einem Antennen-Teil (50) mit mehreren einzelnen Antennen (2),
- einem Zuführungs-Teil (60) zum geschützten Zuführen wenigstens eines Kabels (3) mit mehreren Kabel-Abschnitten (3.50, 3.60) zum Antennen-Teil (50),
**dadurch gekennzeichnet, dass**
- das Antennen-Teil (50) lösbar, mittels eines Flansch-Blocks (70) am Zuführungs-Teil (60) befestigt ist, aber druckdicht, also Gas-dicht, auch gegenüber Vakuum, gegenüber der Umgebung um die Teile (50, 60, 70) der Antennen-Einheit (1) herum,
- der Kabel-Abschnitt (3.60) des Zuführungs-Teils (60) leicht lösbar, mittels einer Kabel-Kupplung (4), am Kabel-Abschnitt (3.50) des Antennen-Teils (50) befestigt ist.

2. Antennen-Einheit nach Anspruch 1,
**dadurch gekennzeichnet, dass**
- das Kabel (3) ein Koaxial-Kabel ist
und/oder
- die Kabel-Kupplung (4) eine Hochfrequenz-Kupplung oder eine SMA-Kupplung ist,
- deren Antennen-seitiges Kupplungs-Teil (4a) im Antennen-Teil (50) insbesondere verschweißt oder verschraubt ist.

3. Antennen-Einheit nach einem der vorhergehenden Ansprüche,
**dadurch gekennzeichnet, dass**
das Antennen-Teil (50) umfasst
- einen hohlen, insbesondere rohrförmigen, Tragkörper (51),
- der insbesondere aus Metall, vorzugsweise Edelstahl, besteht,
- mindestens eine Antenne (2), die am Tragkörper (51) befestigt ist und dadurch einen Durchbruch (5) in der Wandung (51a) des Tragkörpers (51) druckdicht verschließt.

4. Antennen-Einheit nach Anspruch 3,
**dadurch gekennzeichnet, dass**
der am Tragkörper (51) befestigte Teil der Antenne (2) aus dem gleichen Material besteht wie der Tragkörper (51) und mit diesem verschweißt oder verklebt ist.

5. Antennen-Einheit nach einem der vorhergehenden Ansprüche,
**dadurch gekennzeichnet, dass**
- das Antennen-Teil (50) keine die wenigstens eine Antenne (2) dicht umgebende Schutzhülle aufweist
oder
- das Antennen-Teil (50) eine die Antenne (2) nicht dicht umgebende Schutzvorrichtung aufweist,
- die insbesondere im Wesentlichen, vorzugsweise nur, aus um das Antennen-Teil (50) herum angeordneten Schutz-Stäben, etwa aus PEEK, besteht.

6. Antennen-Einheit nach einem der vorhergehenden Ansprüche,
**dadurch gekennzeichnet, dass**
- die Antenne (2) eine Reflektor-Platte (21) sowie einen im Abstand davor angeordneten Radiator (22) umfasst,
- insbesondere die Reflektor-Platte (21) den Durchbruch (5) dicht verschließend am Tragkörper (51) befestigt, insbesondere verschweißt, ist.

7. Antennen-Einheit nach den Ansprüchen 3 und 6 und gewünschtenfalls nach Anspruch 4 oder 5,
**dadurch gekennzeichnet, dass**
- zumindest die Reflektor-Platte (21) und/oder der Radiator (22) und/oder der Tragkörper (51) aus dem gleichen Material bestehen und insbesondere aus dem gleichen Material wie der Druckbehälter (101), insbesondere Edelstahl, insbesondere der Sorte 1.4.4.2004/AISI 31GL-FDA/GMP oder 1.4.4.2004/AINSI 316L, bestehen
und/oder
- der Radiator (22) lösbar an der Reflektor-Platte (21) befestigt ist.

8. Antennen-Einheit nach Anspruch 6 und gewünschtenfalls nach Anspruch 7,
**dadurch gekennzeichnet, dass**
- in einem Durchbruch der Reflektor-Platte (21) oder an der Rückseite (21b) der Reflektor-Platte (21) vor einem Durchbruch (5) ein Kupplungs-Teil (14a) einer Kabel-Kupplung (14) angeordnet ist welches von der Rückseite des Einkopplungsstückes (13) ins Innere des Tragkörpers 51 hinein abragt und
- das Kupplungs-Teil (14a) über ein Einkopplungsstück (13) welches insbesondere einen Koppelstift (15) umfasst, mit dem Radiator (22) elektrisch verbunden ist, insbesondere an diesem dauerhaft, also ohne Zerstörung der Verbindung nicht lösbar, fixiert, insbesondere verlötet oder verschweißt, ist.

9. Antennen-Einheit nach Anspruch 6 und gewünschtenfalls nach Anspruch 7 oder 8,
**dadurch gekennzeichnet, dass**
- im unteren Bereich, insbesondere am tiefsten Punkt, insbesondere in der unteren Stirnwand des Tragkörpers (51), eine Zugangsöffnung (7) vorhanden ist,
- die insbesondere als dicht verschließbare Gewindeöffnung (7) ausgebildet ist,
- die insbesondere geeignet ist zum Anschließen einer Begasungs-Vorrichtung zum Zwecke etwa der Dichtigkeitsprüfung.

10. Antennen-Einheit nach einem der vorhergehenden Ansprüche,
**dadurch gekennzeichnet, dass**
- der Flansch-Block (70) zwei dicht gegeneinander pressbare, insbesondere verschraubbare, insbesondere kappenförmige Blockteile (70a, b) mit je wenigstens einer Durchgangsöffnung für das Kabel (3) aufweist,
- der freie Innenraum des Flansch-Block (70) groß genug ist zur Aufnahme der wenigstens einen Kabel-Kupplung (4), insbesondere
- wenigstens eines der Kupplungs-Teile (4a, b, c), insbesondere ein Kupplung-Zwischenstück (4c) in einem der Blockteile (70a, b) befestigt, insbesondere dicht befestigt, insbesondere verschweißt oder dicht verschraubt ist
und/oder
- die beiden Blockteile (70a, b) aus dem gleichen Material, insbesondere Metall, insbesondere Edelstahl, bestehen.

11. Antennen-Einheit nach einem der vorhergehenden Ansprüche,
**dadurch gekennzeichnet, dass**
das Zuführungs-Teil (60)
- einen beidseits offenen, rohrförmigen Zuführungskörper (61) aufweist, in dem das wenigstens eine Kabel (3) verläuft,
- eines der Blockteile (70b) oder einen Flansch (63) aufweist, das am Antennen-seitigen Ende am Zuführungskörper (61) dicht befestigt, insbesondere verschweißt ist,
- eine Wand-Durchführung (62) am Antennen-abgewandten Ende des Zuführungskörpers (61) aufweist, die integraler Bestandteil des Zuführungskörpers (61) oder umfänglich dicht mit diesem verbunden ist.

12. Antennen-Einheit nach einem der vorhergehenden Ansprüche,
**dadurch gekennzeichnet, dass**
das Blockteil (70b) aus dem gleichen Material besteht wie der Zuführungskörper (61).

13. Antennen-Einheit nach einem der vorhergehenden Ansprüche,
**dadurch gekennzeichnet, dass**
das Zuführungs-Teil (60)
- ein formhaltiges, gerades oder gekrümmtes, Rohr ist
oder
- ein umfänglich dichter, flexibler Schlauch, insbesondere ein Wellschlauch, insbesondere aus Edelstahl, ist.

14. Antennen-Einheit nach einem der vorhergehenden Ansprüche,
**dadurch gekennzeichnet, dass**
- das Antennen-Teil (50) und/oder das Zuführungs-Teil (60) eine Entfeuchtungs-Einheit (90) umfasst,
- insbesondere ein Feuchtigkeit absorbierender Stoff wie Silika-Gel austauschbar in einem Entfeuchtungs-Behälter (91) angeordnet ist, der über eine dichte Verbindung mit dem Innenraum des Teils (50, 60) verbunden ist.

15. Antennen-Einheit nach einem der vorhergehenden Ansprüche,
**dadurch gekennzeichnet, dass**
- das Antennen-Teil (50) im fertig montierten Zustand der Antennen-Einheit (1) um seine größte Erstreckungsrichtung (50') relativ zum Zuführungs-Teil (60) verschwenkbar und fixierbar ist
- insbesondere mittels eines als Drehkupplung ausgebildeten Flansch-Blocks (70) oder Kabel-Durchführung (62).

16. **Gefriertrocknungs-Anlage** (100) mit
- einem temperierbaren Druckbehälter (101),
- einer außerhalb des Druckbehälters (101) angeordneten elektronischen Steuerung (100*),
- einer Antennen-Einheit (1) mit
- im Druckbehälter (101) angeordnetem Antennen-Teil (50)
- einem Zuführungs-Teil (60), dessen Zuführungskörper (61) mit einer Kabel-Durchführung (62) von der Antennen-Einheit (50) zur Steuerung (100*) oder elektronischen Abfrage-Einheit (1*) für die Antennen (2) durch die Wand des Druckbehälters (101) ausgestattet ist,
**dadurch gekennzeichnet, dass**
die Antennen-Einheit (1) nach einem der vorhergehenden Ansprüche ausgebildet ist.

17. Gefriertrocknungs-Anlage nach Anspruch 16,
**dadurch gekennzeichnet, dass**
eine Halte-Vorrichtung im Inneren des Druckbehälters (101) vorhanden ist zum, insbesondere lösbaren oder beweglichen, insbesondere zusätzlichen, Befestigen der Antennen-Einheit (100), insbesondere deren Antennen-Teil (50) am Druckbehälter (101).

18. **Verfahren** zum Herstellen einer Antennen-Einheit (1) mit einem Antennen-Teil (50) und einen Zuführungs-Teil (60) für Kabel (3) zum Antennen-Teil (50) nach Anspruch 3 und gewünschtenfalls einem der Ansprüche 4 bis 15,
**dadurch gekennzeichnet, dass**
zum Herstellen des Antennen-Teils (50)
- das Kabel (3) in den Tragkörper (51) des Antennen-Teils (50) eingeführt wird,
- das Antennen-seitige Ende (3a) des Kabels (3) aus dem Durchbruch (5) heraus vorstehend mit der Antenne (2), insbesondere deren Einkopplungsstück (13), verbunden wird,
- die Antenne (2) als Verschluss des Durchbruchs (5) dicht auf oder in diesem befestigt wird.

19. Verfahren nach Anspruch 18,
**dadurch gekennzeichnet, dass**
- das Antennen-seitige Ende des Kabels (3) durch lösbares Kontaktieren oder nur unter Zerstörung der Verbindung lösbar, insbesondere durch Verlöten oder Verschweißen, mit der Antenne (2) verbunden wird,
und/oder
- die Antenne (2), insbesondere deren Einkopplungsstück (13), auf oder in dem Durchbruch (5) verschweißt wird.

20. **Verfahren** zum Montieren einer Antennen-Einheit (1) nach einem der Ansprüche 1 - 15, in einem Druckbehälter (101), insbesondere einer Gefriertrocknungs-Anlage (100) nach einem der Ansprüche 16 oder 17,
**dadurch gekennzeichnet, dass**
- das Zuführungs-Teil (60) mit wenigstens einem Kabel-Abschnitt (3.60) darin im Wand-Durchlass des Druckbehälters (101) dicht befestigt wird,
- das Antennen-Teil (50) davor oder danach mit wenigstens einem Kabel-Abschnitt (3.50) darin in einer Soll-Lage im Druckbehälter (101) positioniert und insbesondere an einer Halte-Vorrichtung des Druckbehälters (1) fixiert wird,
- Zuführungs-Teil (60) und Antennen-Teil (50) über einen Flansch-Block (70) mechanisch druckdicht sowie hinsichtlich ihrer Kabel-Abschnitte (3.50 und 3.60) miteinander verbunden werden.

21. Verfahren nach Anspruch 20,
**dadurch gekennzeichnet, dass**
das Zuführungs-Teil (60) von außen in den Wand-Durchlass (102) der Wandung (101a) des Druckbehälters (101) eingesteckt und druckdicht gegenüber der Wand (101a) des Druckbehälters (101) fixiert wird.

## Claims

1. **Antenna unit** (1) comprising
- an antenna part (50) comprising a plurality of individual antennas (2),
- a feed part (60) for feeding at least one cable (3) comprising a plurality of cable portions (3.50, 3.60) to the antenna part (50) in a protected manner,
**characterised in that**
- the antenna part (50) is detachably fastened to the feed part (60) by means of a flange block (70), but in a pressure-tight, i.e. gas-tight, manner, also under a vacuum, relative to the surroundings around the parts (50, 60, 70) of the antenna unit (1),
- the cable portion (3.60) of the feed part (60) is fastened to the cable portion (3.50) of the antenna part (50) so as to be easily detachable by means of a cable coupler (4).

2. Antenna unit according to claim 1,
**characterised in that**
- the cable (3) is a coaxial cable
and/or
- the cable coupler (4) is a high-frequency coupler or an SMA coupler,
- the antenna-side coupler part (4a) is in particular welded or screwed into the antenna part (50).

3. Antenna unit according to any of the preceding claims,
**characterised in that**
the antenna part (50) comprises
- a hollow, in particular tubular, carrier body (51),
- which in particular consists of metal, preferably stainless steel,
- at least one antenna (2), which is fastened to the carrier body (51) and thus closes a cut-out (5) in the wall (51a) of the carrier body (51) in a pressure-tight manner.

4. Antenna unit according to claim 3,
**characterised in that**
the part of the antenna (2) fastened to the carrier body (51) consists of the same material as the carrier body (51) and is welded or bonded thereto.

5. Antenna unit according to any of the preceding claims,
**characterised in that**
- the antenna part (50) does not comprise a protective casing surrounding the at least one antenna (2) in a leak-tight manner
or
- the antenna part (50) comprises a protective device surrounding the antenna (2) in a non-leak-tight manner,
- which in particular substantially, preferably only, consists of protective rods, for example made of PEEK, arranged around the antenna part (50).

6. Antenna unit according to any of the preceding claims,
**characterised in that**
- the antenna (2) comprises a reflector plate (21) and a radiator (22) arranged at a distance therefrom,
- in particular, the reflector plate (21) is fastened to, in particular welded to, the carrier body (51) so as to close the cut-out (5) in a leak-tight manner.

7. Antenna unit according to claims 3 and 6 and, if desired, according to claim 4 or 5,
**characterised in that**
- at least the reflector plate (21) and/or the radiator (22) and/or the carrier body (51) consist of the same material and in particular consist of the same material as the pressure vessel (101), in particular stainless steel, in particular of the 1.4.4.2004/AISI 31GL-FDA/GMP or 1.4.4.2004/AINSI 316L type,
and/or
- the radiator (22) is detachably fastened to the reflector plate (21).

8. Antenna unit according to claim 6 and, if desired, according to claim 7, **characterised in that**
- a coupler part (14a) of a cable coupler (14), which protrudes from the rear face of the coupling piece (13) into the interior of the carrier body (51), is arranged in a cut-out in the reflector plate (21) or on the rear face (21b) of the reflector plate (21) in front of a cut-out (5) and
- the coupler part (14a) is electrically connected to the radiator (22), in particular is fixed, in particular soldered or welded, thereto permanently, i.e. in a manner in which it is not detachable without destroying the connection, via a coupling piece (13) which in particular comprises a coupling pin (15).

9. Antenna unit according to claim 6 and, if desired, according to claim 7 or 8, **characterised in that**
- an access opening (7) is provided in the lower region, in particular at the lowest point, in particular in the lower end wall of the carrier body (51),
- which access opening is in particular designed as a threaded opening (7) which can be closed in a leak-tight manner
- and is in particular suitable for attaching a gassing device for the purpose of leak testing, for example.

10. Antenna unit according to any of the preceding claims,
**characterised in that**
- the flange block (70) comprises two in particular cap-shaped block parts (70a, b) that can be pressed, in particular screwed, against one another in a leak-tight manner and each comprise at least one through-opening for the cable (3),
- the free interior space in the flange block (70) is large enough for receiving the at least one cable coupler (4), in particular
- at least one of the coupler parts (4a, b, c), in particular a coupler adapter (4c), is fastened, in particular fastened in a leak-tight manner, in particular welded or screwed in a leak-tight manner, in one of the block parts (70a, b)
and/or
- the two block parts (70a, b) consist of the same material, in particular metal, in particular stainless steel.

11. Antenna unit according to any of the preceding claims,
**characterised in that**
the feed part (60) comprises
- a tubular feed body (61) which is open on either side and in which the at least one cable (3) extends,
- one of the block parts (70b) or a flange (63), which is fastened, in particular welded, in a leak-tight manner to the feed body (61) on the antenna-side end,
- a wall feedthrough (62) on the end of the feed body (61) remote from the antenna, which feedthrough is an integral component of the feed body (61) or is connected thereto in an extensively leak-tight manner.

12. Antenna unit according to any of the preceding claims,
**characterised in that**
the block part (70b) consists of the same material as the feed body (61).

13. Antenna unit according to any of the preceding claims,
**characterised in that**
the feed part (60) is
- a straight or curved tube that keeps its shape
or
- an extensively leak-tight, flexible hose, in particular a corrugated hose, in particular made of stainless steel.

14. Antenna unit according to any of the preceding claims,
**characterised in that**
- the antenna part (50) and/or the feed part (60) comprises a dehumidifying unit (90),
- in particular, a moisture-absorbing substance such as silica gel is replaceably arranged in a dehumidifying vessel (91), which is connected to the interior space of the part (50, 60) via a leak-tight connection.

15. Antenna unit according to any of the preceding claims,
**characterised in that**
- in the fully installed state of the antenna unit (1), the antenna part (50) can be pivoted and fixed about its greatest direction of extension (50') relative to the feed part (60),
- in particular by means of a flange block (70) or cable feedthrough (62) designed as a rotating coupler.

16. **Freeze-drying system** (100) comprising
- a temperature-controllable pressure vessel (101),
- an electronic controller (100*) arranged outside the pressure vessel (101),
- an antenna unit (1) comprising
- an antenna part (50) arranged in the pressure vessel (101),
- a feed part (60), the feed body (61) of which is equipped with a cable feedthrough (62) from the antenna unit (50) to the controller (100*) or electronic query unit (1*) for the antennas (2) through the wall of the pressure vessel (101),
**characterised in that**
the antenna unit (1) is designed according to any of the preceding claims.

17. Freeze-drying system according to claim 16,
**characterised in that**
a retaining device is provided in the interior of the pressure vessel (101) for in particular detachably or movably, in particular additionally, fastening the antenna unit (100), in particular its antenna part (50), to the pressure vessel (101).

18. **Method** for producing an antenna unit (1) comprising an antenna part (50) and a feed part (60) for cables (3) to the antenna part (50) according to claim 3 and, if desired, according to any of claims 4 to 15,
**characterised in that**
for producing the antenna part (50),
- the cable (3) is introduced into the carrier body (51) of the antenna part (50),
- the antenna-side end (3a) of the cable (3) is connected to the antenna (2), in particular its coupling piece (13), so as to project from the cut-out (5),
- the antenna (2) is fastened to or in the cut-out (5) in a leak-tight manner as a closure of said opening.

19. Method according to claim 18,
**characterised in that**
- the antenna-side end of the cable (3) is detachably connected to the antenna (2), in particular by soldering or welding, by detachable contacting or only by destroying the connection,
and/or
- the antenna (2), in particular its coupling piece (13), is welded to or in the cut-out (5).

20. **Method** for installing an antenna unit (1) according to any of claims 1-15 in a pressure vessel (101), in particular a freeze-drying system (100) according to any of claims 16 or 17,
**characterised in that**
- the feed part (60) having at least one cable portion (3.60) therein is fastened in the wall passage in the pressure vessel (101) in a leak-tight manner,
- the preceding or following antenna part (50) having at least one cable portion (3.50) therein is positioned in the pressure vessel (101) in an intended position and is in particular fixed to a retaining device of the pressure vessel (1),
- the feed part (60) and the antenna part (50) are interconnected in a mechanically leak-tight manner and in respect of their cable portions (3.50 and 3.60) via a flange block (70).

21. Method according to claim 20,
**characterised in that**
the feed part (60) is inserted into the wall passage (102) in the wall (101a) of the pressure vessel (101) from outside and is fixed in a leak-tight manner against the wall (101a) of the pressure vessel (101).

## Revendications

1. **Unité d'antenne** (1) avec
- une partie antenne (50) comprenant plusieurs antennes individuelles (2),
- une partie d'alimentation (60) pour l'alimentation protégée d'au moins un câble (3) avec plusieurs sections de câble (3.50, 3.60) vers la partie antenne (50),
**caractérisée en ce que**
- la partie antenne (50) est fixée de manière amovible à la partie d'alimentation (60) au moyen d'un bloc à bride (70), mais étanche à la pression, donc étanche aux gaz, même au vide, à l'environnement autour des parties (50, 60, 70) de l'unité d'antenne (1)
- la section de câble (3.60) de la partie d'alimentation (60) étant fixée de manière facilement amovible au moyen d'un raccord de câble (4), à la section de câble (3.50) de la partie antenne (50).

2. Unité d'antenne selon la revendication 1,
**caractérisée en ce que**
- le câble (3) est un câble coaxial
et/ou
- le raccord de câble (4) est un raccord haute fréquence ou un raccord SMA,
- dont la partie de raccord côté antenne (4a) est notamment soudée ou vissée dans la partie antenne (50).

3. Unité d'antenne selon l'une des revendications précédentes,
**caractérisée en ce que**
la partie antenne (50) comprend :
- un corps de support creux (51), en particulier tubulaire, qui est en particulier en métal, de préférence en acier inoxydable,
- au moins une antenne (2), qui est fixée au corps de support (51) et ferme ainsi de manière étanche à la pression un passage (5) dans la paroi (51a) du corps de support (51).

4. Unité d'antenne selon la revendication 3,
**caractérisée en ce que**
la partie de l'antenne (2) fixée au corps de support (51) est constituée du même matériau que le corps de support (51) et est soudée ou collée à celui-ci.

5. Unité d'antenne selon l'une des revendications précédentes,
**caractérisée en ce que**
- la partie antenne (50) ne comporte pas de gaine de protection entourant étroitement ladite au moins une antenne (2),
ou
- la partie antenne (50) comporte un dispositif de protection qui n'entoure pas étroitement l'antenne (2),
- qui est constitué essentiellement, de préférence uniquement, de tiges de protection disposées autour de la partie antenne (50), par exemple en PEEK.

6. Unité d'antenne selon l'une des revendications précédentes,
**caractérisée en ce que**
- l'antenne (2) comprend une plaque réflectrice (21) ainsi qu'un radiateur (22) disposé à distance devant celle-ci,
- la plaque réflectrice (21) en particulier est fixée, en particulier soudée, au corps de support (51) de manière à fermer hermétiquement le passage (5).

7. Unité d'antenne selon les revendications 3 et 6 et, si on le souhaite, selon la revendication 4 ou 5,
**caractérisée en ce que**
- au moins la plaque réflectrice (21) et/ou le radiateur (22) et/ou le corps de support (51) sont fabriqués du même matériau et en particulier du même matériau que le récipient sous pression (101), en particulier en acier inoxydable, en particulier du type 1.4.4.2004/AISI 31GL-FDA/GMP ou 1.4.4.2004/AINSI 316L,
et/ou
- le radiateur (22) est fixé de manière amovible à la plaque réflectrice (21).

8. Unité d'antenne selon la revendication 6 et, si on le souhaite, selon la revendication 7,
**caractérisée en ce que**
- une partie d'accouplement (14a) d'un coupleur de câble (14) est disposée dans un passage de la plaque réflectrice (21) ou à l'arrière (21b) de la plaque réflectrice (21) devant un passage (5), laquelle partie d'accouplement dépasse de l'arrière de la partie d'accouplement (13) vers l'intérieur du corps de support (51) et que
- la partie d'accouplement (14a) est reliée électriquement au radiateur (22) par l'intermédiaire d'une partie d'accouplement (13) qui comprend notamment une broche d'accouplement (15), en particulier de manière permanente, c'est-à-dire de manière non détachable sans détruire la connexion, en particulier par brasage ou soudage.

9. Unité d'antenne selon la revendication 6 et, si on le souhaite, selon la revendication 7 ou 8,
**caractérisée en ce que**
- une ouverture d'accès (7) est présente dans la partie inférieure, en particulier au point le plus bas, en particulier dans la paroi frontale inférieure du corps de support (51),
- l'ouverture d'accès est conçue en particulier comme une ouverture filetée (7) pouvant être fermée de manière étanche,
- qui est particulièrement adaptée au raccordement d'un dispositif de gazage, par exemple pour un test d'étanchéité.

10. Unité d'antenne selon l'une des revendications précédentes,
**caractérisée en ce que**
- le bloc à bride (70) comporte deux parties de bloc (70a, b) pouvant être pressées l'une contre l'autre de manière étanche, en particulier vissées, en particulier en forme de capuchon avec au moins une ouverture de passage pour le câble (3) chacune,
- l'espace intérieur libre du bloc à bride (70) est suffisamment grand pour accueillir au moins un raccord de câble (4), en particulier
- au moins l'une des parties de raccord (4a, b, c), en particulier une partie intermédiaire de raccord (4c) est fixée dans l'une des parties de bloc (70a, b) , en particulier de manière étanche, en particulier par soudage ou vissage étanche,
et/ou
- les deux parties de bloc (70a, b) sont constituées du même matériau, en particulier de métal, en particulier de l'acier inoxydable.

11. Unité d'antenne selon l'une des revendications précédentes,
**caractérisée en ce que**
la partie d'alimentation (60)
- présente un corps d'alimentation (61) tubulaire ouvert des deux côtés, dans lequel passe ledit au moins un câble (3),
- présente l'une des parties de bloc (70b) ou une bride (63), qui est fixée de manière étanche, en particulier soudée, à l'extrémité côté antenne du corps d'alimentation (61),
- présente un passage mural (62) à l'extrémité du corps d'alimentation (61) opposée à l'antenne, qui fait partie intégrante du corps d'alimentation (61) ou qui est relié de manière étanche à la périphérie de celui-ci.

12. Unité d'antenne selon l'une des revendications précédentes,
**caractérisée en ce que**
la partie de bloc (70b) est constituée du même matériau que le corps d'alimentation (61).

13. Unité d'antenne selon l'une des revendications précédentes,
**caractérisée en ce que**
la partie d'alimentation (60) est
- un tube rigide, droit ou courbé, ou
- un tuyau flexible, étanche sur toute sa circonférence, en particulier un tuyau ondulé, en particulier en acier inoxydable.

14. Unité d'antenne selon l'une des revendications précédentes,
**caractérisée en ce que**
- la partie antenne (50) et/ou la partie d'alimentation (60) comprend une unité de déshumidification (90),
- en particulier une substance absorbant l'humidité telle que du gel de silice est disposée de manière remplaçable dans un récipient de déshumidification (91), qui est relié de manière étanche à l'intérieur de la partie (50, 60).

15. Unité d'antenne selon l'une des revendications précédentes,
**caractérisée en ce que**
- la partie antenne (50) peut être pivotée et fixée autour de son axe principal (50') par rapport à la partie d'alimentation (60) lorsque l'unité d'antenne (1) est complètement assemblée,
- en particulier au moyen d'un bloc à bride (70) ou d'un passage de câble (62) conçu comme un accouplement rotatif.

16. **Installation de lyophilisation** (100) avec
- un récipient sous pression (101) pouvant être tempéré,
- une commande électronique (100*) disposée à l'extérieur du récipient sous pression (101),
- une unité d'antenne (1) avec
- une partie antenne (50) disposée dans le récipient sous pression (101),
- une partie d'alimentation (60), dont le corps d'alimentation (61) est équipé d'un passage de câble (62) allant de l'unité d'antenne (50) à la commande (100*) ou à l'unité d'interrogation électronique (1*) pour les antennes (2) à travers la paroi du récipient sous pression (101),
**caractérisé en ce que**
- l'unité d'antenne (1) est conçue selon l'une des revendications précédentes.

17. Installation de lyophilisation selon la revendication 16,
**caractérisée en ce que**
un dispositif de maintien est prévu à l'intérieur du récipient sous pression (101) pour fixer, en particulier de manière amovible ou mobile, en particulier de manière supplémentaire, l'unité d'antenne (100), en particulier sa partie antenne (50), au récipient sous pression (101).

18. **Procédé de** fabrication d'une unité d'antenne (1) avec une partie antenne (50) et une partie d'alimentation (60) pour câble (3) vers la partie antenne (50) selon la revendication 3 et, si souhaité, selon l'une des revendications 4 à 15,
**caractérisé en ce que**
pour fabriquer la partie antenne (50)
- le câble (3) est introduit dans le corps de support (51) de la partie antenne (50),
- l'extrémité côté antenne (3a) du câble (3) sortant du passage (5) est reliée à l'antenne (2), en particulier à sa partie d'accouplement (13),
- l'antenne (2) est fixée de manière étanche sur ou dans le passage (5) pour la fermer.

19. Procédé selon la revendication 18,
**caractérisé en ce que**
- l'extrémité côté antenne du câble (3) est reliée à l'antenne (2) par un contact amovible ou seulement en détruisant la connexion, en particulier par brasage ou soudage,
et/ou
- l'antenne (2), en particulier sa partie d'accouplement (13), est soudée sur ou dans le passage (5).

20. **Procédé de** montage d'une unité d'antenne (1) selon l'une des revendications 1 à 15, dans un récipient sous pression (101), en particulier une installation de lyophilisation (100) selon l'une des revendications 16 ou 17,
**caractérisé en ce que**
- la partie d'alimentation (60) est fixée de manière étanche dans le passage de paroi du récipient sous pression (101) avec au moins une section de câble (3.60) à l'intérieur,
- la partie antenne (50) est positionnée avant ou après avec au moins une section de câble (3.50) à l'intérieur dans une position de référence dans le récipient sous pression (101) et est fixée en particulier à un dispositif de maintien du récipient sous pression (1),
- la partie d'alimentation (60) et la partie antenne (50) sont reliées entre elles par un bloc à bride (70) de manière étanche à la pression et au niveau de leurs sections de câble (3.50 et 3.60).

21. Procédé selon la revendication 20,
**caractérisé en ce que**
la partie d'alimentation (60) est insérée de l'extérieur dans le passage de paroi (102) de la paroi (101a) du récipient sous pression (101) et est fixée de manière étanche à la pression par rapport à la paroi (101a) du récipient sous pression (101).
